# EUROPÄISCHE PATENTANMELDUNG

(11) **EP 1 850 108 A2**
(43) Veröffentlichungstag der Anmeldung: **31.10.2007**
(21) Anmeldenummer: 07004842.6
(22) Anmeldetag: 09.03.2007
(51) Int. Cl.: G01M 15/00

(54) **Motorsteuerungseinrichtung**

(30) Priorität: 29.04.2006 DE 102006020065
(71) Anmelder: Dr.Ing. h.c. F. Porsche Aktiengesellschaft, 70435 Stuttgart (DE)
(72) Erfinder: Gruenter, Thomas, 71711 Steinheim-Höpfigheim (DE); Geertz, Marko, 71297 Mönsheim (DE)

(57) **Zusammenfassung**

Die Erfindung betrifft eine Motorsteuerungseinrichtung für einen Motor eines Kraftfahrzeugs, wobei die Motorsteuerungseinrichtung auf Grundlage einer Drehmomenthüllkurve abhängig von einer Gaspedalstellung und einer Motordrehzahl ein zulässiges Motordrehmoment vorgibt, wobei die Motorsteuerungseinrichtung eine Schnittstelle zum Anschluss einer Diagnoseeinrichtung aufweist, und wobei über die Diagnoseeinrichtung der Motorsteuerungseinrichtung eine ein Motordrehmoment und/oder eine Motordrehzahl repräsentierende Eingriffsgröße vorgebbar ist, auf Basis derer der Motor zu Prüfzwecken bzw. Diagnosezwecken ansteuerbar ist. Erfindungsgemäß ist dann, wenn in der Motorsteuerungseinrichtung und/oder der Diagnoseeinrichtung mindestens ein Prüfkriterium erfüllt ist, die Drehmomenthüllkurve der Motorsteuerungseinrichtung zu Prüfzwecken bzw. Diagnosezwecken derart aufweitbar oder umgehbar, dass bei unbetätigtem Gaspedal und bei einer definierten Motordrehzahl auf Anforderung der Diagnoseeinrichtung ein größeres Motordrehmoment zulässig ist als das von der Drehmomenthüllkurve bei unbetätigtem Gaspedal und der definierten Motordrehzahl vorgegebene Motordrehmoment.

## Beschreibung

Die Erfindung betrifft eine Motorsteuerungseinrichtung eines Kraftfahrzeugs nach dem Oberbegriff des Anspruchs 1.

Die Verbrennungsluftzufuhr zu einem Motor eines Kraftfahrzeugs wird durch eine Öffnungsstellung bzw. Winkelstellung einer Drosselklappe des Motors eingestellt. Abhängig von der Verbrennungsluftzufuhr zum Motor wird die demselben zugeführte Kraftstoffmenge bestimmt, um so die Zusammensetzung des zündfähigen Verbrennungsluft-Kraftstoff-Gemisches einzustellen und so letztendlich das vom Motor bereitgestellte Motordrehmoment zu bestimmen.

Der Betrieb eines Motors wird von einer Motorsteuerungseinrichtung gesteuert bzw. geregelt, wobei aus der Praxis bereits Motorsteuerungseinrichtungen bekannt sind, welche die Drosselklappe eines Motors elektrisch bzw. elektronisch verstellen. Eine solche Funktionalität von Motorsteuerungseinrichtungen wird auch mit dem Schlagwort des elektronischen Gaspedals (E-Gas) bezeichnet. Hierbei überwacht die Motorsteuerungseinrichtung die von einem Fahrer vorgenommene Betätigung eines Gaspedals mit Hilfe eines Gaspedalwertgebers, der eine elektrische bzw. elektronische Messgröße an die Motorsteuerungseinrichtung übermittelt, die auf Basis der elektrischen bzw. elektronischen Messgröße des Gaspedals einen Sollwert für die Winkelstellung bzw. Öffnungsstellung der Drosselklappe bestimmt. Dabei kann von anderen Systemen und Steuerungseinrichtungen, so z.B. von einer Getriebesteuerungseinrichtung, das Stellsignal für die Drosselklappe mit hoher Variabilität beeinflusst werden.

Bei Motorsteuerungseinrichtungen mit einer solchen elektronischen bzw. elektrischen Verstellung der Drosselklappe ist als Sicherheitskonzept eine sogenannte Drehmomenthüllkurve in der Motorsteuerungseinrichtung hinterlegt, die hauptsächlich abhängig von einer Gaspedalstellung und einer Motordrehzahl ein zulässiges Motordrehmoment für den Motor eines Kraftfahrzeugs vorgibt.

Auf Basis einer solchen Drehmomenthüllkurve lässt die Motorsteuerungseinrichtung bei einem unbetätigten Gaspedal und bei einer vorgegebenen Motordrehzahl nur ein relativ kleines Motordrehmoment zu.

Aus der Praxis bekannte Motorsteuerungseinrichtungen verfügen weiterhin über eine Schnittstelle, an die zu Prüfzwecken bzw. Diagnosezwecken bei Fabrikdiagnosen im Rahmen einer Fahrzeugproduktion oder bei Werkstattdiagnosen im Rahmen einer Fahrzeugwartung eine Diagnoseeinrichtung angeschlossen werden kann. Über eine Diagnoseeinrichtung kann der Motorsteuerungseinrichtung eine ein Motordrehmoment und/oder eine Motordrehzahl repräsentierende Eingriffsgröße vorgegeben werden, auf Basis derer der Motor zu Prüfzwecken bzw. Diagnosezwecken angesteuert werden soll.

Dabei beschränkt jedoch die in der Motorsteuerungseinrichtung hinterlegte Drehmomenthüllkurve bei unbetätigtem Gaspedal das zulässige Motordrehmoment, so dass bis dato bei der Durchführung von Fabrikdiagnosen bzw. Werkstattdiagnosen das Gaspedal um einen definierten Betrag betätigt werden muss, um einen Konflikt mit der Drehmomenthüllkurve zu vermeiden. Hierzu muss bei Fabrikdiagnosen oder Werkstattdiagnosen entweder ein Werker das Gaspedal des Kraftfahrzeugs betätigen oder es muss eine speziell angepasste Einrichtung im Kraftfahrzeug montiert werden, die für die Betätigung des Gaspedals sorgt. Beide Varianten erfordern demnach zusätzliche Arbeitsgänge am Kraftfahrzeug zur Durchführung von Diagnosearbeiten bzw. Prüfarbeiten am Kraftfahrzeug.

Hiervon ausgehend liegt der vorliegenden Erfindung das Problem zu Grunde, eine neuartige Motorsteuerungseinrichtung eines Kraftfahrzeugs zu schaffen.

Dieses Problem wird dadurch gelöst, dass die eingangs genannte Motorsteuerungseinrichtung durch die Merkmale des kennzeichnenden Teils des Anspruchs 1 weitergebildet ist.

Erfindungsgemäß ist dann, wenn in der Motorsteuerungseinrichtung und/oder der Diagnoseeinrichtung mindestens ein Prüfkriterium erfüllt ist, die Drehmomenthüllkurve der Motorsteuerungseinrichtung zu Prüfzwecken bzw. Diagnosezwecken derart aufweitbar oder umgehbar, dass bei unbetätigtem Gaspedal auf Anforderung der Diagnoseeinrichtung bei einer definierten Motordrehzahl ein größeres Motordrehmoment zulässig ist als das von der Drehmomenthüllkurve bei unbetätigtem Gaspedal und der definierten Motordrehzahl vorgegebene Motordrehmoment.

Im Sinne der hier vorliegenden Erfindung wird vorgeschlagen, dass eine Diagnoseeinrichtung unter Aufweitung bzw. Umgehung der Drehmomenthüllkurve der Motorsteuerungseinrichtung motordrehmomenterhöhende und/oder motordrehzahlerhöhende Eingriffsgrößen vorgeben kann, und zwar dann, wenn in der Motorsteuerungseinrichtung und/oder der Diagnoseeinrichtung mindestens ein Prüfkriterium bzw. Überwachungskriterium erfüllt ist. Hierdurch kann vermieden werden, dass bei der Durchführung von Fabrikdiagnosen oder Werkstattdiagnosen ein Werker oder eine angepasste Vorrichtung das Gaspedal des Kraftfahrzeugs betätigen muss. Hierdurch kann die Effektivität von Fabrikdiagnosen sowie Werkstattdiagnosen gegenüber dem Stand der Technik gesteigert werden.

Nach einer vorteilhaften Weiterbildung der Erfindung ist die Drehmomenthüllkurve der Motorsteuerungseinrichtung ausschließlich zu Prüfzwecken bzw. Diagnosezwecken bei Fabrikdiagnosen am Ende einer Kraftfahrzeugproduktion aufweitbar oder umgehbar, wobei hierzu insbesondere bei Überschreitung einer definierten Anzahl von Motorstarts die Aufweitung bzw. Umgehung der Drehmomenthüllkurve automatisch und irreversibel sperrbar ist.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
eine stark schematisierte Darstellung eines Kraftfahrzeugs mit einer Motorsteuerungseinrichtung und einer an die Motorsteuerungseinrichtung angeschlossenen Diagnoseeinrichtung;
ein Diagramm zur Verdeutlichung des Problems der erfindungsgemäßen Motorsteuerungseinrichtung.

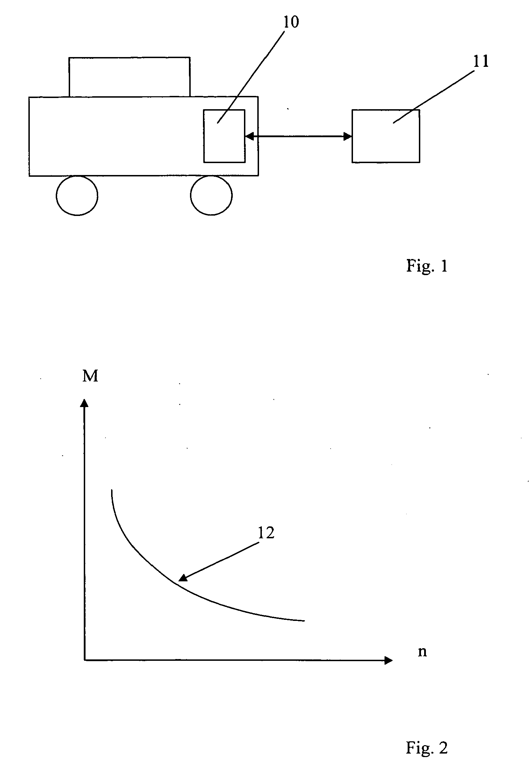

Fig. 1 zeigt stark schematisiert ein Kraftfahrzeug mit einer Motorsteuerungseinrichtung 10, wobei an die Motorsteuerungseinrichtung 10 des Kraftfahrzeugs zur Durchführung einer Fabrikdiagnose bzw. Werkstattdiagnose eine Diagnoseeinrichtung 11 über eine nicht-dargestellte Schnittstelle angeschlossen ist. Bei der Motorsteuerungseinrichtung 10 handelt es sich um eine Motorsteuerungseinrichtung mit einer sogenannten EGAS Funktionalität.

Bei einer solchen EGAS Funktionalität wird die Betätigung eines Gaspedals des Kraftfahrzeugs mit Hilfe eines Gaspedalwertgebers überwacht, wobei die Motorsteuerungseinrichtung auf Basis der Messgröße des Gaspedalwertgebers sowie gegebenenfalls auf Basis von Eingriffsgrößen weiterer Steuerungseinrichtungen des Kraftfahrzeugs und/oder externer Diagnoseeinrichtungen eine elektrische bzw. elektronische Stellgröße zur Verstellung einer Drosselklappe des Motors erzeugt.

In der Motorsteuerungseinrichtung 10 ist dabei eine Drehmomenthüllkurve hinterlegt, die abhängig von der Gaspedalbetätigung und einer Motordrehzahl ein zulässiges Motordrehmoment vorgibt. So zeigt Fig. 2 stark schematisiert in einem Diagramm, in welchem auf der horizontal verlaufenden Achse die Motordrehzahl n und auf der vertikal verlaufenden Achse das Motordrehmoment M aufgetragen ist, eine Drehmomenthüllkurve 12, die für ein unbetätigtes Gaspedal gültig ist.

So kann Fig. 2 entnommen werden, dass eine solche Drehmomenthüllkurve 12 bei einem unbetätigten Gaspedal und bei relativ hohen Motordrehzahlen nur ein relativ kleines Motordrehmoment zulässt. Wird demnach zu Prüfzwecken bzw. Diagnosezwecken von der Diagnoseeinrichtung 11 eine ein Motordrehmoment und/oder eine Motordrehzahl repräsentierende Eingriffsgröße vorgegeben, auf Basis derer bei einer definierten Motordrehzahl ein relativ hohes Motordrehmoment gewünscht ist, so steht dies bei unbetätigtem Gaspedal in Konflikt mit der Drehmomenthüllkurve 12, weshalb bei aus der Praxis bekannten Motorsteuerungseinrichtung zur Durchführung von Fabrikdiagnosen und/oder Werkstattdiagnosen über einen Werker oder eine speziell angepasste Vorrichtung das Gaspedal des Kraftfahrzeugs betätigt werden muss, um einen Konflikt mit der Drehmomenthüllkurve zu vermeiden.

Im Sinne der hier vorliegenden Erfindung ist in der Motorsteuerungseinrichtung 10 dann, wenn in der Motorsteuerungseinrichtung 10 und/oder in der Diagnoseeinrichtung 11 mindestens ein Prüfkriterium bzw. Überwachungskriterium erfüllt ist, die in der Motorsteuerungseinrichtung 10 hinterlegte Drehmomenthüllkurve zu Prüfzwecken bzw. Diagnosezwecken bei Fabrikdiagnosen und/oder Werkstattdiagnosen derart aufweitbar oder umgehbar, dass bei einem unbetätigten Gaspedal auf Anforderung der Diagnoseeinrichtung bei einer definierten Motordrehzahl ein größeres Motordrehmoment zulässig ist, als dass von der Drehmomenthüllkurve bei unbetätigtem Fahrpedal und der definierten Motordrehzahl vorgegebene Motordrehmoment.

Hierdurch kann dann bei Fabrikdiagnosen und/oder Werktstattdiagnosen auf eine Betätigung des Gaspedals, sei es durch einen Werker oder eine speziell angepasste Vorrichtung, verzichtet werden.

Vorzugsweise ist die Drehmomenthüllkurve der Motorsteuerungseinrichtung zu Prüfzwecken bzw. Diagnosezwecken nur dann aufweitbar bzw. umgehbar, wenn dass Kraftfahrzeug bei angeschlossener Diagnoseeinrichtung steht, wenn also die Geschwindigkeit des Kraftfahrzeugs kleiner als ein definierter Grenzwert ist.

Wie oben bereits erwähnt, gibt die Diagnoseeinrichtung zur Prüfzwecken bzw. Diagnosezwecken der Motorsteuerungseinrichtung eine ein Motordrehmoment und/oder eine Motordrehzahl repräsentierende Eingriffsgröße vor. Dabei kann die Diagnoseeinrichtung der Motorsteuerungseinrichtung unmittelbar ein gewünschtes Motordrehmoment vorgeben, andererseits ist es auch möglich, dass die Diagnoseeinrichtung der Motorsteuerungseinrichtung eine gewünschte Motordrehzahl vorgibt, auf Basis derer dann die Motorsteuerungseinrichtung das Motordrehmoment berechnet. Auch ist es möglich, dass die Diagnoseeinrichtung der Motorsteuerungseinrichtung anstelle konkreter Werte für eine Motordrehzahl und/oder für ein Motordrehmoment lediglich Variablen vorgibt, für die dann in der Motorsteuerungseinrichtung entsprechende Werte eines Motordrehmoments und/oder einer Motordrehzahl hinterlegt sind.

Nach einer vorteilhaften Weiterbildung der hier vorliegenden Erfindung kann vorgesehen sein, dass die in der Motorsteuerungseinrichtung hinterlegte Drehmomenthüllkurve ausschließlich zu Prüfzwecken bzw. Diagnosezwecken bei Fabrikdiagnosen am Ende einer Kraftfahrzeugproduktion bei angeschlossener Diagnoseeinrichtung aufweitbar oder umgehbar ist. Dies kann beispielsweise dadurch realisiert werden, dass die Aufweitung bzw. Umgehung der Drehmomenthüllkurve irreversibel gesperrt bzw. verriegelt werden kann, insbesondere dadurch, dass bei Überschreiten eines Kriteriums, vorzugsweise bei Überschreiten einer definierten Anzahl von Motorstarts, die Aufweitung bzw. Umgehung der Drehmomenthüllkurve automatisch und irreversibel gesperrt wird. Hierdurch kann eine Art elektronische Abrissschraube realisiert werden, welche die Aufweitung bzw. Umgehung der Drehmomenthüllkurve ausschließlich am Ende der Kraftfahrzeugproduktion zulässt.

Im Sinne der hier vorliegenden Erfindung ist die Drehmomenthüllkurve der Motorsteuerungseinrichtung zu Prüfzwecken bzw. Diagnosezwecken nur dann aufweitbar bzw. umgehbar, wenn in der Motorsteuerungseinrichtung und/oder in der Diagnoseeinrichtung mindestens ein Prüfkriterium bzw. Überwachungskriterium erfüllt ist.

Dies kann z. B. dadurch realisiert werden, dass die Motorsteuerungseinrichtung und die Diagnoseeinrichtung im Sinne einer Handshakeprüfung zwischen der Motorsteuerungsteuerungseinrichtung und der Diagnoseeinrichtung die Erfüllung von Prüfkriterien bzw. Überwachungskriterien überprüfen, und die Aufweitung bzw. Umgehung der Drehmomenthüllkurve der Steuerungseinrichtung nur dann zulassen, wenn die Prüfung erfolgreich absolviert worden ist.

Die Zulässigkeitsprüfung für die Aufweitung bzw. Umgehung der Drehmomenthüllkurve zu Prüfzwecken bzw. Diagnosezwecken kann auch dadurch realisiert werden, dass die Diagnoseeinrichtung der Motorsteuerung mindestens eine Diagnosebotschaft übermittelt, auf Basis derer überprüft wird, ob die Aufweitung bzw. Umgehung der Drehmomenthüllkurve zulässig ist. Eine solche Diagnosebotschaft enthält neben der bloßen Eingriffsanforderung und der ein Motordrehmoment und/oder eine Motordrehzahl repräsentierenden Eingriffsgröße vorzugsweise weiterhin einen Botschaftszähler und eine Botschaftschecksumme, wobei nur dann, wenn der Botschaftszähler und die Botschaftschecksumme vorbestimmte Prüfkriterien erfüllen, die Aufweitung und Umgehung der Drehmomenthüllkurve zulässig ist. So muss z.B. gewährleistet sein, dass der Botschaftszähler bei jeder Übermittlung einer Diagnosebotschaft sich um einen vorbestimmten Betrag erhöht, wobei dies mit der Botschaftschecksumme gegengeprüft wird. Diese Prüfung kann um eine Komplementprüfung ergänzt werden, um die Sicherheit zu erhöhen. Weiterhin kann die Überprüfung in mehreren Ebenen der Motorsteuerungseinrichtung und/oder Diagnoseeinrichtung mehrfach bzw. redundant durchgeführt werden, um sich gegenseitig bei der Zulässigkeitsprüfung zu berücksichtigen und um so die Sicherheit der Zulässigkeitsprüfung zu erhöhen.

Nur dann, wenn, wie bereits erwähnt, in der Motorsteuerungseinrichtung und/oder der Diagnoseeinrichtung mindestens ein Prüfkriterium der Zulässigkeitsprüfung erfüllt ist, kann die Drehmomenthüllkurve der Motorsteuerungseinrichtung zu Prüfzwecken bzw. Diagnosezwecken aufgeweitet bzw. umgangen werden.

Weiterhin kann vorgesehen werden, dass eine Aufweitung oder Umgehung der in der Motorsteuerungseinrichtung hinterlegten Drehmomenthüllkurve auf Basis von Eingriffsgrößen einer Diagnoseeinrichtung nur dann zulässig ist, wenn die Diagnoseeinrichtung einen in der Motorsteuerungseinrichtung hinterlegten Zugriffscode kennt und auf Basis dieses Zugriffscodes die erfindungsgemäße Funktionalität der Aufweitung oder Umgehung der Drehmomenthüllkurve einschalten sowie ausschalten kann.

## Patentansprüche

1. Motorsteuerungseinrichtung für einen Motor eines Kraftfahrzeugs, wobei die Motorsteuerungseinrichtung auf Grundlage einer Drehmomenthüllkurve abhängig von einer Gaspedalstellung und einer Motordrehzahl ein zulässiges Motordrehmoment vorgibt, wobei die Motorsteuerungseinrichtung eine Schnittstelle zum Anschluss einer Diagnoseeinrichtung aufweist, und wobei über die Diagnoseeinrichtung der Motorsteuerungseinrichtung eine ein Motordrehmoment und/oder eine Motordrehzahl repräsentierende Eingriffsgröße vorgebbar ist, auf Basis derer der Motor zu Prüfzwecken bzw. Diagnosezwecken ansteuerbar ist, **dadurch gekennzeichnet, dass** dann, wenn in der Motorsteuerungseinrichtung und/oder der Diagnoseeinrichtung mindestens ein Prüfkriterium erfüllt ist, die Drehmomenthüllkurve der Motorsteuerungseinrichtung zu Prüfzwecken bzw. Diagnosezwecken derart aufweitbar oder umgehbar ist, dass bei unbetätigtem Gaspedal auf Anforderung der Diagnoseeinrichtung bei einer definierten Motordrehzahl ein größeres Motordrehmoment zulässig ist als das von der Drehmomenthüllkurve bei unbetätigtem Gaspedal und der definierten Motordrehzahl vorgegebene Motordrehmoment.

2. Motorsteuerungseinrichtung nach Anspruch 1, **dadurch gekennzeichnet, dass** die Drehmomenthüllkurve der Motorsteuerungseinrichtung zu Prüfzwecken bzw. Diagnosezwecken nur dann aufweitbar oder umgehbar ist, wenn das Kraftfahrzeug steht.

3. Motorsteuerungseinrichtung nach Anspruch 1 oder 2, **dadurch gekennzeichnet, dass** die Drehmomenthüllkurve der Motorsteuerungseinrichtung zu Prüfzwecken bzw. Diagnosezwecken bei Fabrikdiagnosen am Ende einer Kraftfahrzeugproduktion und/oder bei Werkstattdiagnosen aufweitbar oder umgehbar.

4. Motorsteuerungseinrichtung nach Anspruch 3, **dadurch gekennzeichnet, dass** die Drehmomenthüllkurve der Motorsteuerungseinrichtung ausschließlich zu Prüfzwecken ) bzw. Diagnosezwecken bei Fabrikdiagnosen am Ende einer Kraftfahrzeugproduktion aufweitbar oder umgehbar, wobei hierzu insbesondere bei Überschreitung einer definierten Anzahl von Motorstarts die Aufweitung bzw. Umgehung der Drehmomenthüllkurve automatisch und irreversibel sperrbar ist.

5. Motorsteuerungseinrichtung nach einem oder mehreren der Ansprüche 1 bis 4, **dadurch gekennzeichnet, dass** die Erfüllung vorbestimmter Prüfkriterien in der Motorsteuerungseinrichtung und der Diagnoseeinrichtung als Prüfung zwischen der Motorsteuerungseinrichtung und der Diagnoseeinrichtung prüfbar ist.

6. Motorsteuerungseinrichtung nach einem oder mehreren der Ansprüche 1 bis 4, **dadurch gekennzeichnet, dass** zur Überprüfung, ob in der Motorsteuerungseinrichtung und der Diagnoseeinrichtung vorbestimmte Prüfkriterien erfüllt sind, die Diagnoseeinrichtung der Motorsteuerungseinrichtung mindestens eine Diagnosebotschaft übermittelt, auf Basis derer überprüft wird, ob die Aufweitung bzw. Umgehung der Drehmomenthüllkurve zulässig ist.

7. Motorsteuerungseinrichtung nach Anspruch 6, **dadurch gekennzeichnet, dass** die Diagnosebotschaft neben einer Eingriffsanforderung und der ein Motordrehmoment und/oder eine Motordrehzahl repräsentierenden Eingriffsgröße weiterhin einen Botschaftszähler und eine Botschaftschecksumme enthält, wobei nur dann, wenn der Botschaftszähler und die Botschaftschecksumme vorbestimmte Prüfkriterien erfüllen, die Aufweitung bzw. Umgehung der Drehmomenthüllkurve zulässig ist.
